Europäisches Patentamt

European Patent Office

Office européen des brevets

(19)

(11) Veröffentlichungsnummer: **0 297 669 B1**

(12) **EUROPÄISCHE PATENTSCHRIFT**

(45) Veröffentlichungstag der Patentschrift: **11.01.95**

(51) Int. Cl.6: **G01N 21/47**, G01M 11/00

(21) Anmeldenummer: **88201323.8**

(22) Anmeldetag: **27.06.88**

(54) **Verfahren zur Messung der von einer Reflexionsstelle reflektierten optischen Strahlung.**

(30) Priorität: **02.07.87 DE 3721823**

(43) Veröffentlichungstag der Anmeldung:
**04.01.89 Patentblatt 89/01**

(45) Bekanntmachung des Hinweises auf die
Patenterteilung:
**11.01.95 Patentblatt 95/02**

(84) Benannte Vertragsstaaten:
**DE FR GB IT SE**

(56) Entgegenhaltungen:
**EP-A- 0 210 341**

**NACHRICHTENTECHNISCHE BERICHTE Heft
3, Dezember 1986, Seiten 61-72; W.E. FREY-
HARDT et al. : "Prinzipien und Anwendungsbeispiele der optischen Messtechnik"**

**ELEKTRONIK Band 35, Nr. 21, Oktober 1986,
Seiten 121,122,125-128 ; H.-P. SIEBERT :
"Messungen unf Prüfungen an LWL-Bauelementen"**

**J.E.E. JOURNAL OF ELECTRONIC ENGINEE-
RING Band 23, Nr. 236, August 1986, Seiten
62-65, Tokyo, JP ; K. KITAGAWA : "OTDR
Makes Breakthrough In Accuracy and Dyna-**

**mic Range"**

(73) Patentinhaber: **Philips Patentverwaltung
GmbH
Wendenstrasse 35c
D-20097 Hamburg (DE)**

(84) Benannte Vertragsstaaten:
**DE**

(73) Patentinhaber: **Philips Electronics N.V.
Groenewoudseweg 1
NL-5621 BA Eindhoven (NL)**

(84) Benannte Vertragsstaaten:
**FR GB IT SE**

(72) Erfinder: **Esser, Hildegard
Birresbornerstrasse 55
D-5000 Köln 41 (DE)**
Erfinder: **Grzesik, Ulrich, Dr. Dipl.-Phys.
August Kierspel-Strasse 161
D-5060 Bergisch Gladbach 2 (DE)**

(74) Vertreter: **Koch, Ingo, Dr.-Ing. et al
Philips Patentverwaltung GmbH,
Wendenstrasse 35c
D-20097 Hamburg (DE)**

EP 0 297 669 B1

**Beschreibung**

Die Erfindung bezieht sich auf ein Verfahren zur Messung der von einer Reflexionsstelle reflektierten optischen Strahlungsleistung als relativer Anteil einer über eine optische Leitung von einem optischen Sender zugeführten Leistung.

Bei einem nach "International Electronical Comission, Technical Commitee 86, Subcommittee 86B: Draft Publication YYY: Generic Specification for fibre optic branching devices - optical tests - Return loss" bekannten Verfahren dieser Art müssen die zur Reflexionsstelle gelangende Leistung und deren reflektierter Anteil durch zwei aufeinanderfolgende Messungen bestimmt werden. Ändert sich die Empfängercharakteristik z.B. infolge von Langzeiteinflüssen oder wegen Temperaturschwankungen,entstehen Meßfehler. Weiterhin muß beim bekannten Verfahren dafür gesorgt werden, daß die Stabilität und die Reproduzierbarkeit der Eigenschaften verwendeter optischer Bauelemente, insbesondere Richtkoppler oder Verbindungselemente, stets gewährleistet ist.

Der Erfindung liegt die Aufgabe zugrunde, das Verfahren der eingangs genannten Art derart zu gestalten, daß mit geringem Aufwand zuverlässige und gleichbleibend genaue Meßwerte erhalten werden.

Die Lösung gelingt dadurch, daß die optische Leitung an ein Rückstreumeßgerät (OTDR) angeschlossen wird, welches in bekannter Weise eine Sendestrahlung über einen optischen Anschluß sendet und eine Empfangs- und Auswerteeinrichtung enthält, mittels welcher ein Meßwert bildbar ist, welcher der in den optischen Anschluß des Rückstreumeßgeräts zurückgestreuten optischen Leistung proportional ist, und daß in den optischen Weg zwischen dem Anschluß des OTDR und dem Ende einer die zu untersuchende Reflexionsstelle enthaltenden Strecke ein Reflexionselement mit bekanntem Reflexionsgrad geschaltet wird.

Für das erfindungsgemäße Verfahren können verfügbare Rückstreumeßgeräte (OTDR) üblicher Bauart verwendet werden, welche an sich zur Dämpfungsmessung von Lichtwellenleitern vorgesehen sind. (Nachrichtentechnische Berichte Heft 3, Dezember 1986, Seite 61-72 ; W.E. Freyhardt et al.: "Prinzipien und Anwendungsbeispiele der optischen Meßtechnik"). Mit diesen konnte zwar bisher auch schon festgestellt werden, daß eine Reflexionsstelle, beispielsweise in einem Steckverbinder, vorhanden ist. Es war jedoch nicht möglich, das genaue Ausmaß des Anteils der von einer Sendeleistung reflektierten Lichtleistung zu ermitteln. Bei erfindungsgemäß eingeschaltetem Reflexionselement, dessen Reflexionsgrad vorgegeben und bekannt ist, werden zwei Reflexionspegel gemessen, aufgrund welcher der gesuchte Reflexionsgrad der Reflexionsstelle ermittelbar ist, ohne daß der Pegel der Sendeleistung bekannt sein muß.

Handelsübliche Rückstreumeßgeräte ermöglichen einen genauen relativen Vergleich der von verschiedenen Rückstreuorten herrührenden Reflexionssignale, so daß beim erfindungsgemäßen Verfahren keine außergewöhnliche Stabilität der Sendeleistung erforderlich ist.

Das Reflexionselement kann am Ende der optischen Strecke nach der zu untersuchenden Reflexionsstelle angeordnet und dann in besonders einfacher Weise eine Endfläche eines LWL sein, die zur optischen Achse orthogonal geschliffen und in ein Medium bekannter Brechzahl eingebettet ist.

Eine für den Anwender gut handbare und einfach aufzubauende Meßeinrichtung ist dadurch gekennzeichnet, daß das Reflexionselement im optischen Weg vor der zu untersuchenden Reflexionsstelle angeordnet wird. Eine solche Reflexionsstelle kann beispielsweise aus zwei mit ihren Endflächen im Abstand voneinander koaxial gegenüberliegenden Lichtwellenleitern (LWL) bestehen, deren Abstandsraum mit einem transparenten Medium, vorzugsweise einem Kleber gefüllt ist, dessen Brechungsindex von dem der LWL abweicht. Durch geeignete Wahl des Brechungsindex läßt sich der gewünschte Reflexionsgrad einstellen.

Vorzugsweise ist vorgesehen, daß zwischen dem Reflexionselement und der zu untersuchenden Reflexionsstelle eine optische Verzögerungsleitung mit einer solchen Mindestlänge vorgesehen wird, daß die vom Anfang und vom Ende der Verzögerungsleitung reflektierten Signale eindeutig vom OTDR unterscheidbar sind.

Die Reflexionen der Reflexionselemente können auf verschiedene an sich bekannte Weise erzeugt werden und insbesondere dadurch, daß es ein in einem Gehäuse fixiertes Ende eines Lichtwellenleiters aufweist, dessen Lichtaustrittsfläche durch Anbringung einer optischen Diskontinuität in gewünschtem Ausmaß reflektierend gestaltet ist.

Gemäß einer Ausführungsart ist vorgesehen, daß die Endfläche des LWL in ein Medium gebettet ist, dessen Brechungsindex von demjenigen des LWL abweicht.

Ein weiteres Mittel zur Erzeugung einer vorgebbaren Reflexion ist dadurch gekennzeichnet, daß die Endfläche des LWL mit einem von 90° abweichenden Winkel zur optischen Achse verläuft.

Ein als Zubehör für ein OTDR besonders geeignetes und einfach handhabbares Reflexionselement ist dadurch gekennzeichnet, daß ein vom Reflexionselement abgehendes Ende eines LWL mit einem optischen Steckanschlußelement verbunden ist und eine solche Mindestlänge hat, daß vom Ende und vom Anfang reflektierte Signale vom OTDR unterscheidbar sind.

Erforderlichenfalls können einem OTDR für dessen Nutzung als Reflexionsmeßgerät mehrere derartiger Reflexionselemente mit abgestuften Reflexionsgraden zugeordnet sein.

Die Erfindung und ihre Vorteile werden anhand der Beschreibung von in der Zeichnung schematisch dargestellten Meßeinrichtungen näher erläutert.

Fig. 1    zeigt eine für die Ausübung des erfindungsgemäßen Verfahrens geeignete Meßeinrichtung

Fig. 2    zeigt eine Abwandlung der in Fig. 1 dargestellten Meßeinrichtung mit einem über Steckkupplungen zwischen OTDR und die zu untersuchende Reflexionsstelle steckbaren Reflexionselement.

Fig. 3    zeigt in stilisierter Form einen erfindungsgemäß gemessenen Signalverlauf.

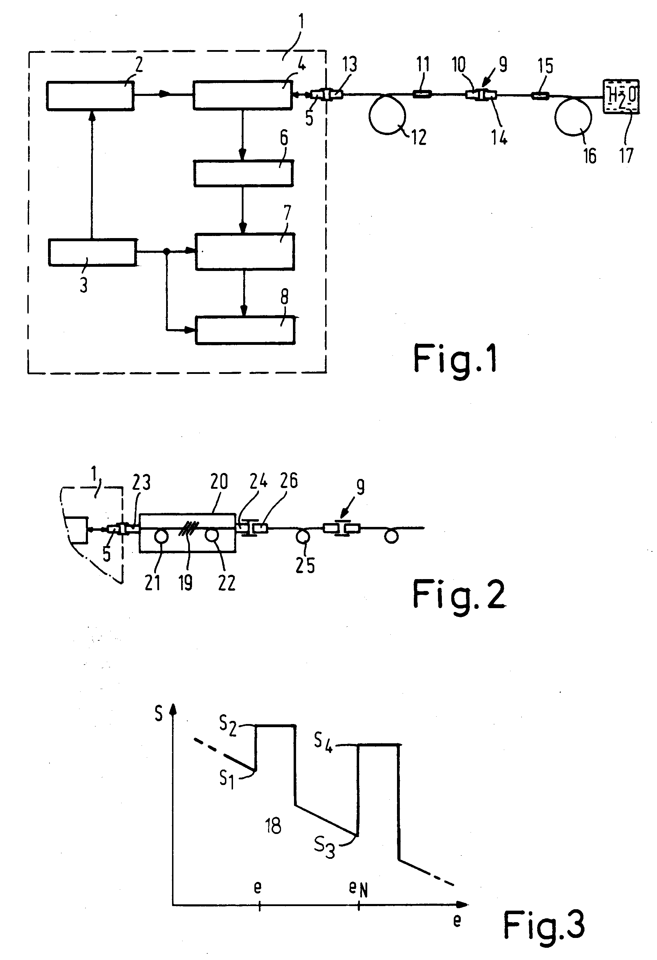

In Fig. 1 ist mit 1 ein optisches Rückstreumeßgerät (OTDR) gebräuchlicher Bauart bezeichnet. Es enthält einen optischen Sender 2 mit einer Laserdiode, welche durch eine Ansteuerschaltung 3 getriggert und deren Sendelicht über einen Verzweigungskoppler 4 an eine Anschlußkupplung 5 geleitet wird.

Das aus einem anzuschließenden LWL zurückgestreute Licht wird von einem Richtkoppler 4 auf einen optischen Empfänger 6 (Photodiode) gerichtet, dessen elektrisches Ausgangssignal in einer Auswerteeinrichtung 7 verarbeitet und in gewünschter transformierter Form von einer Anzeigeeinrichtung 8 angezeigt wird. Damit Sende- und Empfangssignale zeitlich koordiniert werden, sind auch die Auswerteschaltung 7 und die Anzeigeeinrichtung 8 von der Aussteuerschaltung 3 getriggert.

Gemäß Fig. 1 dient das OTDR 1 zur Messung des Reflexionsfaktors R der Steckverbindung 9. Dabei ist ein Meßaufbau gewählt, welcher schnell und einfach zu verwirklichen ist. Ein mit einem Steckverbinder 10 verbundener LWL ist über eine Spleißstelle 11 mit einer Verzögerungsleitung 12 verbunden, welche ihrerseits über einen Steckverbinder 13 an die Anschlußkupplung 5 des OTDR 1 angekuppelt ist. Der von der anderen Hälfte 14 der Steckverbindung 9 kommende LWL ist über eine Spleißstelle 15 verbunden mit einem Verzögerungs-LWL 16, dessen anderes Ende mit seiner zur optischen Achse orthogonalen Endfläche in ein Medium 17 geleitet ist.

Wenn der Brechungsindex dieses Mediums (z.B. Wasser) kleiner als der des Verzögerungs-LWL 16 ist, ergibt sich eine Reflexion, deren Ausmaß bzw. deren Reflexionsfaktor $R_N$ berechnet werden kann.

Vom OTDR 1 werden Rückstreusignale erfaßt, welche von jeder Stelle der optischen Strecke im Bereich vom Steckverbinder 13 bis zum Medium 17 herrühren. Wie anhand Fig. 3 näher erläutert wird, brauchen für die Messung des Reflexionsfaktors R nur die Bereiche des Steckverbinders 9 und der Endfläche des Verzögerungs-LWL 16 untersucht zu werden.

In Fig. 3 ist der Verlauf des von der Anzeigeeinrichtung 8 des OTDR 1 angezeigten transformierten Signals S in logarithmischer Darstellung idealisiert und nicht maßstäblich im interessierenden Bereich über der Länge l dargestellt, welche ein Maß für den Abstand des jeweiligen Rückstreuorts auf der zu untersuchenden optischen Strecke ist. An der Stelle unmittelbar vor der zu prüfenden Reflexionsstelle des Steckverbinders 9 wird ein Rückstreusignal $S_1$ gemessen, an der Reflexionsstelle selbst ein Signal $S_2$, unmittelbar vor der Endfläche des Verzögerungs-LWL 16 ein Signal $S_3$ und an der als Reflexionselement wirkenden Endfläche dieses Verzögerungs-LWL 16 ein Signal $S_4$.

Die Spleißstellen 11 und 15 können als verlustfrei angenommen werden, während die Steckverbindung 9 eine gegebenenfalls zu berücksichtigende Gesamtdämpfung a aufweist.

Das Sendesignal des OTDR ist mit einer solchen zeitlichen Breite zu senden, daß ein stabiler Endwert der Signale $S_2$ und $S_4$ erfaßbar ist, d.h. diese Signale sollten zur Sicherheit über einen gewissen Abschnitt im wesentlichen parallel zur Koordinatenachse verlaufen.

Die von der Anzeigeeinrichtung 8 angezeigten Signale $S_1$ bis $S_4$ ergeben sich wie folgt:

$$S_1 = -5 \log(P_o e^{-\alpha \cdot l} \alpha_R)$$
$$S_2 = -5 \log(R\, P_o e^{-\alpha \cdot l})$$
$$S_3 = -5 \log(P_o e^{-\alpha \cdot l} N\, 10^{-a/10} \alpha_R)$$
$$S_4 = -5 \log(R_N P_o e^{-\alpha \cdot l} N\, 10^{-a/10})$$

Dabei ist:

$\alpha$    = Dämpfungsbelag der LWL in dB/km

$\alpha_R$    = Rückstreukoeffizient des LWL

R    = Reflexionsgrad der zu untersuchenden Reflexionsstelle

$R_N$    = Reflexionsgrad des Reflexionselements

$P_o$    = eingekoppelte Sende-Lichtleistung

a    = Koppeldämpfung der Steckverbindung 9

l    = Länge der Strecke bis zur Reflexionsstelle in km

3

EP 0 297 669 B1

$l_N$ = Länge der Strecke bis zum Reflexionselement in km

Damit ergibt sich folgende Gleichung:

$$-10 \log (R_N/R) = 2 (S_4 - S_2) + 10 \log e^{-\alpha(l_N - 1)} + 2 a$$

Der gesuchte Reflexionsgrad R ergibt sich folglich unabhängig von der eingekoppelten Sende-Lichtleistung $P_o$.

Da die Größen $\alpha$ und a im allgemeinen sehr klein sind, können die entsprechenden Glieder der obigen Gleichung meist vernachlässigt werden. Der Dämpfungsbelag ergibt sich jedoch ebenfalls durch die Messung als Steigung des Kennlinienabschnitts 18 nach Fig. 3, so daß eine korrigierende Berücksichtigung des entsprechenden Gliedes problemlos möglich ist. Die Koppeldämpfung a kann erforderlichenfalls zur Korrektur ebenfalls berücksichtigt werden.

Bei der abgewandelten Meßeinrichtung nach Fig. 2 ist die Reflexionsstelle 19 in ein Gehäuse 20 eingebracht. Dabei liegen sich die Endflächen zweier Verzögerungs-LWL 21 und 22 mit Abstand koaxial gegenüber. Der Abstandsraum ist zur Bildung der Reflexionsstelle 19 mit einem transparenten Kleber ausgefüllt, dessen Brechungsindex in erforderlichem Ausmaß von dem der Verzögerungs-LWL 21 und 22 abweicht, so daß sich der gewünschte Reflexionsgrad $R_N$ ergibt. Die anderen Enden der Verzögerungs-LWL 21 und 22 enden in Steckkupplungen 23 bzw. 24 des Gehäuses 20. Der zu untersuchende Steckverbinder 9 ist über einen Verzögerungs-LWL 25 mit der Steckkupplung 26 an die Steckkupplung 24 des Gehäuses 20 angeschlossen.

Ein Reflexionselement 19 nach Fig. 3 ist als Zubehörteil für den OTDR 1 mittels der Steckanschlüsse in einfacher Weise zwischenschaltbar, so daß der Anwendungsbereich eines vorhandenen OTDR mit wenig Aufwand für die Nutzung als Reflexionsmeßgerät wesentlich erweitert ist.

Bei dem Ausführungsbeispiel nach den Fig. 1 und 2 ist jeweils nur eine zu untersuchende Reflexionsstelle angenommen. Selbstverständlich ist es möglich, auch mehrere in einer optischen Strecke befindliche Reflexionsstellen mit einem Meßvorgang zu erfassen.

**Patentansprüche**

1. Verfahren zur Messung der von einer Reflexionsstelle (9) reflektierten optischen Strahlungsleistung als relativer Anteil R einer über eine optische Leitung von einem optischen Sender (2) zugeführten Leistung, wobei die optische Leitung (12,25) an ein Rückstreumeßgerät (1) bzw. OTDR angeschlossen wird, welches in bekannter Weise eine Sendestrahlung über einen optischen Anschluß (5) sendet und eine Empfangs- und Auswerteeinrichtung (6 bzw. 7) enthält, mit welcher Meßwerte bildbar sind, welche der in den optischen Ausgang (5) des Rückstreumeßgeräts (1) zurückgestreuten optischen Leistung proportional und den Reflexionsorten zuordbar sind, dadurch gekennzeichnet, daß in den optischen Weg zwischen dem Anschluß (5) des OTDR (1) und dem Ende einer die zu untersuchende Reflexionsstelle (9) enthaltenden optischen Strecke ein Reflexionselement (17,19) mit bekanntem Reflexionsgrad $R_N$ geschaltet wird, und daß der relative Anteil R der von der Reflexionsstelle reflektierten Strahlungsleistung aus der Gleichung:

$$-10 \log (R_N/R) = 2 (S_4-S_2) + 10 \log e^{-\alpha(l_{N-1})} + 2 a.$$

ermittelt wird. Dabei bedeuten:

$l_N$ = Länge der Strecke bis zum Reflexionselement in km

$l$ = Länge der Strecke bis zur Reflexionsstelle in km

a = Koppeldämpfung einer gegebenenfalls als zu untersuchende Reflexionstelle verwendeten Steckverbindung

$S_2$ = an der Reflexionsstelle ermitteltes Reflexionssignal

$S_4$ = am Reflexionselement ermitteltes Reflexionssignal.

2. Verfahren nach Anspruch 1, dadurch gekennzeichnet, daß das Reflexionselement (17) in einer der zu untersuchenden Reflexionsstelle (9) folgenden optischen Wegstrecke (16) angeordnet wird.

4

**3.** Verfahren nach Anspruch 1,
dadurch gekennzeichnet, daß das Reflexionselement (19) im optischen Weg vor der zu untersuchenden Reflexionsstelle (9) angeordnet wird.

**4.** Verfahren nach einem der Ansprüche 1 bis 3,
dadurch gekennzeichnet, daß zwischen dem Reflexionselement (17, 19) und der zu untersuchenden Reflexionsstelle (9) eine optische Verzögerungsleitung (16,22) mit einer solchen Mindestlänge vorgesehen wird, daß die vom Anfang und vom Ende der Verzögerungsleitung (16,22) reflektierten Signale eindeutig vom OTDR (1) unterscheidbar sind.

**5.** Verfahren nach einem der Ansprüche 1 bis 4,
dadurch gekennzeichnet, daß das Reflexionselement ein in einem Gehäuse (17,20) fixiertes Ende eines Lichtwellenleiters ist, dessen Lichtaustrittsfläche durch Anbringung einer optischen Diskontinuität in gewünschtem Ausmaß reflektierend gestaltet ist.

**6.** Verfahren nach Anspruch 5,
dadurch gekennzeichnet, daß die Endfläche des LWL (21) in ein Medium (19) gebettet ist, dessen Brechungsindex von demjenigen des LWL verschieden ist.

**7.** Verfahren nach Anspruch 5 oder 6,
dadurch gekennzeichnet, daß die Endfläche des LWL (16,21) mit einem von 90° abweichenden Winkel zur optischen Achse verläuft.

**8.** Verfahren nach einem der Ansprüche 5 bis 7,
dadurch gekennzeichnet, daß ein vom Reflexionselement (19) ausgehendes Ende des LWL (21,22) mit einem optischen Steckanschluß versehen ist und eine solche Mindestlänge aufweist, daß vom Ende und vom Anfang reflektierte Signale vom OTDR (1) unterscheidbar sind.

## Claims

**1.** A method of measuring the optical radiation energy reflected by a reflection place (9) as a relative fraction R of energy supplied by an optical transmitter (2) via an optical line, in which the optical line (12,25) is connected to a backscattering measuring device or OTDR (1) which transmits radiation in known manner via an optical connector (5) and which comprises a reception and evaluation device (6 and 7, respectively) for forming measuring values which are proportional to the optical power backscattered in the optical connector (5) of the backscattering measuring device (1) and can be associated with the reflection places, characterized in that a reflection element (17,19) having a known reflection factor $R_N$ is arranged in the optical path between the connector (5) of the OTDR (1) and the end of an optical path comprising the reflection place (9) to be examined and in that the relative fraction R of the transmission power reflected by the reflection place is determined from the equation

$$-10 \log (R_N/R) = 2 (S_4 - S_2) + 10 \log e^{-\alpha(^1N^{-1})} + 2 a.$$

$l_N$ = length of path up to reflection element in km.
$l$ = length of path up to reflection place in km
$a$ = coupling attenuation constant of a connector pair to be possible examined as a reflection place
$S_2$ = reflection signal determined at the reflection place
$S_4$ = reflection signal determined at the reflection element.

**2.** A method as claimed in Claim 1, characterized in that the reflection element (17) is arranged in one of the optical path sections (16) behind a reflection place (9) to be examined.

**3.** A method as claimed in Claim 1, characterized in that the reflection element (19) is arranged in the optical path before the reflection place (9) to be examined.

4. A method as claimed in any one of Claims 1 to 3, characterized in that an optical delay line (16, 22) is arranged between the reflection element (17, 19) and the reflection place (9) to be examined and has such a minimum length that the signals reflected from the beginning and the end of the delay line (16, 22) can be unambiguously distinguished by the OTDR (1).

5. A method as claimed in any one of Claims 1 to 4, characterized in that the reflection element is an end of a light waveguide fixed in a housing (17, 20), whose light exit face is formed with an optical discontinuity to provide the desired reflection.

6. A method as claimed in Claim 5, characterized in that the end face of the light waveguide (21) is embedded in a medium (19) whose refractive index is different from that of the light waveguide.

7. A method as claimed in Claim 5 or 6, characterized in that the end face of the light waveguide (16, 21) extends to the optical axis at an angle which is different from 90°.

8. A method claimed in any one of Claims 5 to 7, characterized in that one end of the light waveguide (21, 22) remote from the reflection element (19) is provided with an optical connector and has such a minimum length that signals reflected from the end and the beginning can be distinguished by the OTDR (1).

**Revendications**

1. Procédé pour mesurer l'énergie de rayonnement optique réfléchie par une zone de réflexion (9) comme fraction relative R d'une énergie fournie par un émetteur optique (2) par l'intermédiaire d'un guide optique, le guide optique (12, 25) étant connectée à un dispositif de mesure de rétrodiffusion (1) ou à un OTDR qui, de manière connue, émet un rayonnement émetteur par l'intermédiaire d'une connexion par fiches optique (5) et qui comporte un dispositif de réception et d'évaluation (6 respectivement 7) capable de former des valeurs de mesure proportionnelles à la puissance optique rétrodiffusée dans la sortie optique (5) du dispositif de mesure de rétrodiffusion (1) et pouvant être associées aux zones de réflexion, caractérisé en ce qu'un élément de réflexion (17, 19) présentant un facteur de réflexion connu $R_N$ est intercalé dans le trajet optique s'étendant entre la connexion par fiches (5) du OTDR et la fin d'un trajet optique comportant la zone de réflexion à examiner (9) et en ce que la fraction relative R de l'énergie de rayonnement réfléchie par la zone de réflexion est établie à l'aide de l'équation:

$$-10 \log (R_N/R) = 2 (S_4 - S_2) + 10 \log e -\alpha(l_N -l) + 2 a,$$

dans laquelle:

$l_N$ = longueur du trajet jusqu'à l'élément de réflexion exprimée en km

$l$ = longueur du trajet jusqu'à la zone de réflexion exprimée en km

$a$ = perte de couplage d'une connexion par fiches utilisée, le cas échéant, comme zone de réflexion à examiner

$S_2$ = signal de réflexion établie à la zone de réflexion

$S_4$ = signal de réflexion établie à l'élément de réflexion

2. Procédé selon la revendication 1, caractérisé en ce que l'élément de réflexion (17) est disposé dans un trajet optique (16) situé derrière la zone de réflexion à examiner (9).

3. Procédé selon la revendication 2, caractérisé en ce que l'élément de réflexion (17) est disposé dans le trajet optique situé devant la zone de réflexion à examiner (9).

4. Procédé selon l'une des revendications 1 à 3, caractérisé en ce qu'entre l'élément de réflexion (17, 19) et la zone de réflexion à examiner (9) on a disposé une ligne de retard optique (16, 22) présentant une telle longueur minimale que le OTDR (1) peut distinguer, sans équivoque, les signaux réfléchis par le commencement et la fin de la ligne de retard (16, 22).

5. Procédé selon l'une des revendications 1 à 4, caractérisé en ce que l'élément de réflexion est constitué d'une extrémité de guide de lumière fixée dans un boîtier (17, 20), dont la surface de sortie de lumière est conçue de manière à présenter une réflexion suffisante par la formation d'une discontinuité optique.

6. Procédé selon la revendication 5, caractérisé en ce que la surface terminale du guide de lumière (21) est noyée dans un milieu (19) dont l'indice de réfraction diffère de celui du guide de lumière.

7. Procédé selon la revendication 5 ou 6, caractérisé en ce que la face terminale du guide de lumière (16, 21) fait un angle autre que 90° par rapport à l'axe optique.

8. Procédé selon l'une quelconque des revendication 5 à 7, caractérisé en ce que l'une extrémité du guide de lumière (21, 22) sortant de l'élément de réflexion (19) est munie d'une connexion par fiches optique et qu'elle présente une telle longueur minimale que le OTDR (1) puisse distinguer des signaux réfléchis par le commencement et la fin de connexion.

Fig.1

Fig.2

Fig.3